# EUROPEAN PATENT APPLICATION

(11) **EP 4 672 470 A1**
(43) Date of publication of application: **31.12.2025**
(21) Application number: 24853159.2
(22) Date of filing: 04.03.2024
(51) Int. Cl.: H01M 50/367, H01M 50/471

(54) **BATTERY CELL, BATTERY, AND ELECTRIC DEVICE**

(30) Priority: 16.08.2023 CN 202311034049
(71) Applicant: Contemporary Amperex Technology Co., Limited, Ningde, Fujian 352100 (CN)
(72) Inventor: WU, Kai, Ningde, Fujian 352100 (CN); LIU, Shuangxu, Ningde, Fujian 352100 (CN); LI, Yao, Ningde, Fujian 352100 (CN); WANG, Can, Ningde, Fujian 352100 (CN)
(74) Representative: Lorenz Seidler Gossel Part. mbB
(86) International application number: PCT/CN2024/079826
(87) International publication number: WO 2025/035743

(57) **Abstract**

Embodiments of the present application provide a battery cell, a battery, and a power consuming apparatus. The battery cell includes: a housing, including a first wall, where the first wall is provided with a pressure relief mechanism; an electrode assembly, accommodated in the housing; and a support structure, disposed between the housing and the electrode assembly, where the support structure is used for forming, between the first wall and the electrode assembly, an exhaust channel in communication with the pressure relief mechanism. The embodiments of the present application provide a battery cell, a battery, and a power consuming apparatus, to reduce a probability that non-directional pressure relief occurs in the battery cell.

## Description

The present application claims priority to Chinese Patent Application No. 202311034049.4, filed with the China National Intellectual Property Administration on August 16, 2023 and entitled "BATTERY CELL, BATTERY, AND POWER CONSUMING APPARATUS", which is incorporated herein by reference in its entirety.

### TECHNICAL FIELD

The present application relates to the field of battery technologies, and in particular, to a battery cell, a battery, and a power consuming apparatus.

### BACKGROUND

In the related art, when thermal runaway occurs in a battery cell, an electrode assembly has a risk of moving toward a first wall of a housing that is provided with a pressure relief mechanism, and consequently, the electrode assembly abuts against the first wall. Consequently, a directional pressure relief channel between the first wall and the electrode assembly is blocked, causing non-directional pressure relief of the battery cell.

### SUMMARY

In view of this, embodiments of the present application provide a battery cell, a battery, and a power consuming apparatus, to reduce a probability that non-directional pressure relief occurs in the battery cell.

According to a first aspect, a battery cell is provided, including: a housing, including a first wall, where the first wall is provided with a pressure relief mechanism; an electrode assembly, accommodated in the housing; and a support structure, disposed between the housing and the electrode assembly, where the support structure is used for forming, between the first wall and the electrode assembly, an exhaust channel in communication with the pressure relief mechanism.

In this embodiment, the support structure is used for forming, between the first wall and the electrode assembly, the exhaust channel in communication with the pressure relief mechanism, so that when thermal runaway occurs in the battery cell, the exhaust channel can guide thermal runaway gas to reach the pressure relief mechanism. In this way, the thermal runaway gas can be vented from the pressure relief mechanism to the outside of the battery cell in a timely manner, thereby reducing a possibility that non-directional pressure relief occurs in the battery cell.

In a possible implementation, the support structure is used for supporting the electrode assembly.

In this embodiment, the support structure is used for supporting the electrode assembly, so that when the thermal runaway occurs in the battery cell, the exhaust channel in communication with the pressure relief mechanism can still be formed between the first wall and the electrode assembly, thereby improving the problem that the non-directional pressure relief occurs in the battery cell.

In a possible implementation, a melting point of the support structure is higher than 100°C.

In this embodiment, the support structure whose melting point is higher than 100°C is used, which helps the battery cell not be easily melted when the thermal runaway occurs. Further, the exhaust channel in communication with the pressure relief mechanism can be formed between the first wall and the electrode assembly, so that the thermal runaway gas can be vented to the outside of the battery cell through the pressure relief mechanism in a timely manner, thereby improving the problem that the non-directional pressure relief occurs in the battery cell.

In a possible implementation, the support structure includes a first support member disposed between the first wall and the electrode assembly.

In this embodiment, the first support member is disposed between the first wall and the electrode assembly, so that the electrode assembly can be directly limited, and when the thermal runaway occurs in the battery cell, the electrode assembly can be prevented from moving toward the first wall. In this way, the thermal runaway gas can reach the pressure relief mechanism through the exhaust channel formed between the first wall and the electrode assembly, and further can be vented from the pressure relief mechanism to the battery cell in a timely manner, thereby reducing the possibility that the non-directional pressure relief occurs in the battery cell.

In a possible implementation, the first support member is fixedly connected to the first wall.

In this embodiment, the first support member is fixedly connected to the first wall, and the first support member is disposed between the first wall and the electrode assembly, so that movement of the first support member inside the battery cell can be reduced, and a probability that the first support member blocks the pressure relief mechanism is reduced.

In a possible implementation, the first support member and the first wall are integrally formed.

In this embodiment, the first support member and the first wall are integrally formed, so that binding strength between the first wall and the first support member can be improved, movement of the first support member inside the battery cell can be reduced, and the probability that the first support member blocks the pressure relief mechanism is reduced.

In a possible implementation, the battery cell further includes a first insulating member, disposed between the electrode assembly and the first wall, where the first insulating member is provided with an avoidance cavity, and the avoidance cavity is configured to accommodate the first support member.

In this embodiment, the avoidance cavity is provided on the first insulating member to accommodate the first support member, so that when insulation between the first wall and the electrode assembly is not affected, a space of the battery cell does not need to be additionally occupied in the thickness direction of the first wall, thereby improving energy density of the battery cell.

In a possible implementation, the battery cell further includes the first insulating member, the first insulating member is configured to insulate the first wall and the electrode assembly, and a melting point of the first support member is higher than a melting point of the first insulating member.

In this embodiment, the melting point of the first support member is set to be higher than the melting point of the first insulating member, so that in a late stage of the thermal runaway, the first support member is not easily melted, and the exhaust channel for the thermal runaway gas to reach the pressure relief mechanism can be provided, thereby reducing the probability that the non-directional pressure relief occurs in the battery cell.

In a possible implementation, in a thickness direction of the first wall, a projection of the first support member on the first wall is disposed in an end region of the first wall along a first direction, and the first direction is perpendicular to the thickness direction of the first wall.

In this embodiment, in the thickness direction of the first wall, the projection of the first support member on the first wall is disposed in the end region of the first wall in the first direction, so that a possibility that an end of the first wall in the first direction abuts against the electrode assembly can be reduced as much as possible. In this way, the thermal runaway gas inside the battery cell can reach the pressure relief mechanism, thereby reducing the possibility that the non-directional pressure relief occurs in the battery cell.

In a possible implementation, a gap is provided between the electrode assembly and the housing in the first direction, the first support member is provided with a first empty cavity that runs through along the first direction, and the first empty cavity is configured to communicate the gap with the pressure relief mechanism.

In this embodiment, the first support member is provided with the first empty cavity that runs through along the first direction, and the first empty cavity is configured to communicate the gap with the pressure relief mechanism, to guide the thermal runaway gas accumulated in the gap to the pressure relief mechanism, thereby reducing the possibility that the thermal runaway gas accumulated in the gap cannot be vented in a timely manner and consequently the housing is burst.

In a possible implementation, the first support member is provided with at least one first through hole that runs through along the first direction, and the first empty cavity includes the at least one first through hole.

In this embodiment, the at least one first through hole that runs through along the first direction is provided on the first support member to form the first empty cavity, so that the possibility that the thermal runaway gas accumulated in the gap cannot be vented in a timely manner and consequently the housing is burst can be reduced. In addition, a weight of the battery cell can also be reduced, and the energy density of the battery cell can also be improved.

In a possible implementation, the first support member includes a plurality of first support blocks disposed at intervals in a second direction, the first empty cavity includes an interval between every two adjacent first support blocks of the plurality of first support blocks, the second direction is perpendicular to the thickness direction of the first wall, and the second direction is perpendicular to the first direction.

In this embodiment, the plurality of first support blocks disposed at intervals in the second direction are configured to form the first empty cavity, so that the possibility that the thermal runaway gas accumulated in the gap cannot be vented in a timely manner and consequently the housing is burst can be reduced. In addition, a weight of the battery cell can also be reduced, and the energy density of the battery cell can also be improved.

In a possible implementation, in the thickness direction of the first wall, a size h of the first support member and a size c of the battery cell satisfy: 0.003≤h/c≤0.13.

In this embodiment, if h/c is less than 0.003, blocking easily occurs due to particles or plates generated due to runaway inside the battery cell, and consequently, the purpose of forming the exhaust channel cannot be achieved. However, when h/c is greater than 0.13, the energy density of the battery cell is seriously sacrificed. When h/c is set between 0.003 and 0.13, the energy density of the battery cell can be balanced and the exhaust channel can be formed between the first wall and the electrode assembly.

In a possible implementation, at least one first support member is disposed between the first wall and the electrode assembly, and in the thickness direction of the first wall, a total projection area S1 of the at least one first support member on the first wall and an area S of the first wall satisfy: 0.012≤S1/S≤0.26.

In this embodiment, when S1/S is less than 0.012, and when the thermal runaway occurs in the battery cell, a contact area between the first support member and the first wall is excessively small. Sufficient mechanical support cannot be provided for the electrode assembly. This may cause a case in which the internal electrode assembly shakes or overlaps with the first wall, and even further worsens a venting path. However, when S1/S is greater than 0.26, the weight of the battery cell is increased, and the energy density is sacrificed. In addition, due to occupation of the inside of the battery cell by the first support member, the free space is further reduced, which is not beneficial to directional pressure relief. S1/S is set between 0.012 and 0.26, so that the energy density of the battery cell can be balanced and the exhaust channel can be formed between the first wall and the electrode assembly.

In a possible implementation, the housing further includes a second wall, the second wall intersects with the first wall, and the support structure includes a second support member fixedly connected to the second wall.

In this embodiment, the second support member is fixedly disposed on the second wall of the housing that intersects the first wall, to support the electrode assembly. This helps prevent the end of the electrode assembly from moving toward the first wall when the thermal runaway occurs in the battery cell, thereby improving the probability of forming the exhaust channel between the first wall and the electrode assembly when the thermal runaway occurs in the battery cell.

In a possible implementation, the second wall forms an accommodating space including an opening, the first wall covers the opening to enable the electrode assembly to be disposed in the accommodating space, and the second support member is disposed at the opening.

In this embodiment, the second support member is disposed at the opening of the accommodating space formed by the second wall, so that a probability that the end of the electrode assembly is prevented from moving toward the first wall can be improved, thereby improving the probability that the exhaust channel is formed between the first wall and the electrode assembly when the thermal runaway occurs in the battery cell.

In a possible implementation, the second support member is provided with a second empty cavity that runs through along the thickness direction of the first wall, and the second empty cavity is configured to guide thermal runaway gas accumulated between the second wall and the electrode assembly to the exhaust channel.

In this embodiment, the second empty cavity that runs through along the thickness direction of the first wall is provided on the second support member, so that the second support member can support the electrode assembly, to reduce the possibility that the end of the electrode assembly moves toward the first wall, and the thermal runaway gas accumulated between the second wall and the electrode assembly 32 can be guided to the exhaust channel through the second empty cavity, thereby reducing the possibility that the non-directional pressure relief occurs in the battery cell.

In a possible implementation, the second support member includes a plurality of second support blocks disposed at intervals along a circumferential direction of the opening, and the second empty cavity includes an interval between every two of the plurality of second support blocks.

In this embodiment, the plurality of second support blocks disposed at intervals along the circumferential direction of the opening to form the second empty cavity, so that the possibility that the thermal runaway gas accumulated between the second wall and the electrode assembly cannot be vented in a timely manner and consequently the housing is burst can be reduced.

In a possible implementation, in the thickness direction of the first wall, a surface of the second support member that is away from the first wall is closer to the first wall than a surface of the electrode assembly that is close to the first wall; and in the thickness direction of the first wall, a projection of the second support member on the first wall intersects with a projection of the electrode assembly on the first wall.

In this embodiment, in the thickness direction of the first wall, the projection of the second support member on the first wall intersects with the projection of the electrode assembly on the first wall, and the second support member is closer to the first wall than the electrode assembly is, so that when the thermal runaway occurs in the battery cell, the second support member can block the electrode assembly from approaching the first wall. In this way, the exhaust channel can be formed between the first wall and the electrode assembly, thereby reducing the possibility that the non-directional pressure relief occurs in the battery cell.

In a possible implementation, the battery cell further includes: an insulating assembly, disposed between the housing and the electrode assembly, and configured to insulate the housing and the electrode assembly; and the support structure includes a third support member, the third support member is fixedly connected to the insulating assembly, and the third support member is disposed between the housing and the insulating assembly.

In this embodiment, the third support member is disposed between the housing and the insulating assembly that is disposed between the housing and the electrode assembly, and the third support member is fixedly connected to the insulating assembly, to support the electrode assembly. This is beneficial to reducing the probability that the electrode assembly moves toward the first wall when the thermal runaway occurs in the battery cell, thereby improving the probability that the exhaust channel is formed between the first wall and the electrode assembly.

In a possible implementation, the insulating assembly includes the first insulating member, the first insulating member is disposed between the first wall and the electrode assembly, and the third support member is fixedly connected to the first insulating member.

In this embodiment, the first insulating member is disposed between the first wall and the electrode assembly, and the third support member is fixedly connected to the first insulating member, so that when the thermal runaway occurs in the battery cell, the probability that the electrode assembly moves toward the first wall can be reduced, thereby increasing the probability that the exhaust channel is formed between the first wall and the electrode assembly.

In a possible implementation, the insulating assembly includes a second insulating member, the second insulating member is covered on an outer surface of the electrode assembly, and the third support member is fixedly connected to the second insulating member.

In this embodiment, the third support member is fixedly connected to the second insulating member covered on the outer surface of the electrode assembly, to support the electrode assembly. This is beneficial to reducing the probability that the electrode assembly moves toward the first wall when the thermal runaway occurs in the battery cell, thereby improving the probability that the exhaust channel is formed between the first wall and the electrode assembly.

In a possible implementation, the third support member is fixedly connected to the insulating assembly in a manner of snapping.

In this embodiment, the third support member is fixedly connected to the insulating assembly in a manner of snapping, so that the binding strength between the third support member and the insulating assembly can be improved, and the probability that the third support member moves inside the battery cell to block the exhaust channel A is reduced.

In a possible implementation, the third support member is fixedly connected to the insulating assembly in a manner of bonding.

In this embodiment, the third support member can be fixedly connected to the insulating assembly in a manner of bonding, so that the binding strength between the third support member and the insulating assembly can be improved, and the probability that the third support member moves inside the battery cell to block the exhaust channel A is reduced.

In a possible implementation, the third support member includes a second through hole, and the second through hole is used for enabling the thermal runaway gas generated by the electrode assembly to be released between the insulating assembly and the housing.

In this embodiment, the second through hole is provided in the third support member, so that the thermal runaway gas generated by the electrode assembly can be released between the insulating assembly and the housing in a timely manner, to further guide the thermal runaway gas to the exhaust channel. In this way, the thermal runaway gas is vented out through the pressure relief mechanism.

In a possible implementation, the third support member is provided with a groove whose opening faces the housing.

In this embodiment, the third support member is provided with the groove whose opening faces the housing, so that an accommodating space of the thermal runaway gas can be enlarged, and the weight of the battery cell can be further reduced, thereby improving the energy density of the battery cell.

In a possible implementation, the battery cell further includes: a support plate, disposed between the electrode assembly and the housing, and located below the electrode assembly along a gravity direction; and the support structure includes a fourth support member, disposed below the electrode assembly along the gravity direction, and a melting point of the fourth support member is higher than a melting point of the support plate.

In this embodiment, the fourth support member is disposed on a side on which the support plate is disposed, to support the electrode assembly, and the melting point of the fourth support member is higher than the melting point of the support plate. This is beneficial to a case in which when the thermal runaway occurs in the battery cell, even if the support plate is melted, the fourth support member is not easily melted, and can still function to support the electrode assembly, and form the space for accommodating the thermal runaway gas, thereby reducing the possibility that the non-directional pressure relief occurs in the battery cell.

In a possible implementation, the fourth support member is fixedly connected to the support plate.

In this embodiment, the fourth support member is fixedly connected to the support plate, which helps form the space accommodating the thermal runaway gas between the electrode assembly and the support plate, thereby reducing the possibility that the non-directional pressure relief occurs in the battery cell.

In a possible implementation, the first wall is an end cover.

In this embodiment, the first support member and the end cover are fixed together. In comparison to fixing the first support member on another wall of the housing, the first support member and the end cover may be fixed together externally, or the first support member is directly formed when the end cover is prepared, and the first support member does not need to be extended into the housing for fixing, thereby improving preparation efficiency of the battery cell.

In a possible implementation, the battery cell further includes an electrode terminal, disposed on the first wall, where the electrode terminal is electrically connected to the electrode assembly.

In this embodiment, an electrical connection to another battery cell can be implemented through an electrical connection between the electrode terminal of the first wall and the electrode assembly, to expand a capacity of the battery.

According to a second aspect, a battery is provided, including the battery cell in the first aspect and any possible implementation of the first aspect.

According to a third aspect, a power consuming apparatus is provided, including the battery in the second aspect, where the battery is configured to supply electric energy to the power consuming apparatus.

### BRIEF DESCRIPTION OF THE DRAWINGS

To describe the technical solutions in embodiments of the present application more clearly, the following briefly describes the accompanying drawings required in the embodiments of the present application. Apparently, the accompanying drawings in the following descriptions show merely some embodiments of the present application, and a person of ordinary skill in the art may derive other drawings from these accompanying drawings without creative efforts.
FIG. 1 is a schematic diagram of a structure of a vehicle disclosed in an embodiment of the present application;
FIG. 2 is a schematic diagram of a structure of a battery disclosed in an embodiment of the present application;
FIG. 3 is an exploded schematic diagram of a battery cell disclosed in an embodiment of the present application;
FIG. 4 is a plane cross-sectional view of a battery cell disclosed in an embodiment of the present application;
FIG. 5 is an exploded schematic diagram of a battery cell disclosed in another embodiment of the present application;
FIG. 6 is a partial cross-sectional view of the battery cell in FIG. 5 along a Y-Z plane;
FIG. 7 is a schematic diagram of a connection between a first wall and a first support member that are disclosed in an embodiment of the present application;
FIG. 8 is a schematic diagram of a connection between a first insulating member and a first support member that are disclosed in an embodiment of the present application;
FIG. 9 is another plane cross-sectional view of a battery cell disclosed in an embodiment of the present application;
FIG. 10 is a top view of a first wall disclosed in an embodiment of the present application;
FIG. 11 is an exploded schematic diagram of another battery cell disclosed in an embodiment of the present application;
FIG. 12 is a cross-sectional view of a housing in FIG. 9 along an X-Z plane;
FIG. 13 is a cross-sectional view of the battery cell in FIG. 9 along a Y-Z plane;
FIG. 14 is an exploded schematic diagram of another battery cell disclosed in an embodiment of the present application;
FIG. 15 is an exploded schematic diagram of another battery cell disclosed in an embodiment of the present application;
FIG. 16 is a schematic diagram of a first connection between a third support member and a second insulating member that are disclosed in an embodiment of the present application;
FIG. 17 is a schematic diagram of a second connection between a third support member and a second insulating member that are disclosed in an embodiment of the present application;
FIG. 18 is a schematic diagram of a structure of a second insulating member disclosed in an embodiment of the present application;
FIG. 19 is another schematic diagram of a structure of a second insulating member disclosed in an embodiment of the present application; and
FIG. 20 is still another plane cross-sectional view of a battery cell disclosed in an embodiment of the present application.

### DETAILED DESCRIPTION

To make the objectives, technical solutions, and advantages of embodiments of the present application clearer, the following clearly describes the technical solutions in embodiments of the present application with reference to the accompanying drawings in the embodiments of the present application. Apparently. the described embodiments are merely some rather than all of the embodiments of the present application. All other embodiments obtained by a person of ordinary skill in the art based on embodiments of the present application without making creative efforts shall fall within the protection scope of the present application.

Unless otherwise defined, meanings of all technical and scientific terms used in the present application are the same as those commonly understood by a person skilled in the art to which the present application belongs; and the terms used in the descriptions of the present application are merely for the purpose of describing specific embodiments, but are not intended to limit the present application. The terms "comprise" and "have" and any variations thereof in the specification and the claims of the present application as well as the descriptions of the accompanying drawings are intended to cover non-exclusive inclusion. The terms "first", "second", and the like in the specification and claims of the present application or the foregoing accompanying drawings are used to distinguish different objects, rather than to describe a specific order or primary-secondary relationship.

The azimuth words appearing in the following description are directions shown in the drawings, and do not limit the specific structure of the present application. In the descriptions of the present application, it should be noted that, unless otherwise stated, the terms "installation", "connected to", and "connected with" are to be understood broadly, and may be, for example, a fixed connection, a disassemble connection, or an integral connection; and they can be connected directly or indirectly through an intermediate medium. For a person of ordinary skill in the art, the specific meanings of the foregoing terms in the present application can be understood according to specific situations.

"Embodiment" mentioned in the present application means that specific features, structures, or characteristics described with reference to the embodiment may be included in at least one embodiment of the present application. The term appearing at different positions of the specification may not refer to the same embodiment or an independent or alternative embodiment that is mutually exclusive with another embodiment. A person skilled in the art should understand, in explicit and implicit manners, that an embodiment described in the present application may be combined with another embodiment.

The term "and/or" in the present application only describes an association relationship for describing associated objects and represents that three relationships may exist. For example, A and/or B may represent the following three cases: Only A exists, both A and B exist, and only B exists. In addition, the character "/" in the present application generally indicates an "or" relationship between the associated objects.

In the present application, "a plurality of means two or more (including two). Similarly, "a plurality of groups" means two or more groups (including two groups), and "a plurality of pieces" means two or more pieces (including two pieces).

In the embodiments of the present application, the battery cell may be a secondary battery, where the secondary battery is a battery cell whose active material can be activated for continuous use through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, or a lead storage battery. This is not limited in the embodiments of the present application.

The battery cell generally includes an electrode assembly. The electrode assembly includes a positive electrode, a negative electrode, and an isolation member. During charging and discharging of the battery cell, active ions (for example, lithium ions) are intercalated and deintercalated back and forth between the positive electrode and the negative electrode. The isolation member is disposed between the positive electrode and the negative electrode, and may serve to prevent a short circuit between the positive electrode and the negative electrode while allowing the active ions to pass through.

In some embodiments, the positive electrode may be a positive electrode plate, and the positive electrode plate may include a positive electrode current collector and a positive electrode active material layer disposed on at least one surface of the positive electrode current collector.

By way of example, the positive electrode current collector has two surfaces opposite to each other in a thickness direction of the positive electrode current collector, and the positive electrode active material is disposed on either or both of the two opposite surfaces of the positive electrode current collector.

By way of example, the positive electrode current collector may be a metal foil or a composite current collector. For example, as the metal foil, a silver-surface-processed aluminum or stainless steel, stainless steel, copper, aluminum, nickel, a carbon electrode, carbon, nickel, or titanium may be used. The composite current collector may include a polymer material substrate layer and a metal layer. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, or polyethylene).

By way of example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries can also be used. These positive electrode active materials may be used alone or in combination of two or more. An example of the lithium-containing phosphate may include, but is not limited to, at least one of lithium iron phosphate (for example, LiFePO4 (also referred to as LFP for short)), a composite material of lithium iron phosphate and carbon, lithium manganese phosphate (for example, LiMnPO4), a composite material of lithium manganese phosphate and carbon, lithium iron manganese phosphate, and a composite material of lithium manganese iron phosphate and carbon.

In some embodiments, the negative electrode may be a negative electrode plate, and the negative electrode plate may include a negative electrode current collector.

By way of example, the negative electrode current collector may be a metal foil or a composite current collector. For example, as the metal foil, a silver-surface-processed aluminum or stainless steel, stainless steel, copper, aluminum, nickel, a carbon electrode, carbon, nickel, or titanium may be used. The composite current collector may include a polymer material substrate layer and a metal layer. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, or polyethylene).

By way of example, the negative electrode plate may include a negative electrode current collector and a negative electrode active material disposed on at least one surface of the negative electrode current collector.

By way of example, the negative electrode current collector has two surfaces opposite to each other in a thickness direction of the negative electrode current collector, and the negative electrode active material is disposed on either or both of the two opposite surfaces of the negative electrode current collector.

By way of example, the negative electrode active material can be a negative electrode active material well known in the art for battery cells. By way of example, the negative electrode active material may include at least one of the following materials: artificial graphite, natural graphite, soft carbon, hard carbon, a silicon-based material, a tin-based material, lithium titanate, or the like.

In some embodiments, the negative electrode can be made of foam metal. The foam metal may be foam nickel, foam copper, foam aluminum, a foam alloy, or foam carbon. When the foam metal is used as the negative electrode plate, the surface of the foam metal may not be provided with the negative electrode active material. Certainly, a negative electrode active material may also be disposed.

By way of example, the negative electrode current collector may also be filled in and/or deposited with a lithium source material, potassium metal, or sodium metal, and the lithium source material is lithium metal and/or a lithium-rich material.

In some embodiments, a material of the positive electrode current collector may be aluminum, and a material of the negative electrode current collector may be copper.

In some implementations, the electrode assembly further includes an isolation member, and the isolation member is disposed between the positive electrode and the negative electrode.

In some implementations, the isolation member is a separator. There is no particular limitation on a type of the separator in the present application, and any well-known separator with a porous structure that has good chemical stability and mechanical stability may be selected.

By way of example, a main material of the separator may be selected from at least one of glass fiber, non-woven fabric, polyethylene, polypropylene, polyvinylidene fluoride, or ceramic.

In some implementations, the isolation member is a solid-state electrolyte. The solid-state electrolyte is disposed between the positive electrode and the negative electrode, and also serves to transmit ions and isolate the positive electrode and the negative electrode.

In some implementations, the battery cell further includes an electrolyte, and the electrolyte serves to transmit ions between the positive electrode and the negative electrode. There is no specific limitation on a type of the electrolyte in the present application, and selection may be performed according to requirements. The electrolyte may be in a liquid, gel, or solid state.

In some implementations, the electrode assembly is of a winding structure. The positive electrode plate and the negative electrode plate are wound into winding structures.

In some implementations, the electrode assembly is of a laminated structure.

By way of example, a plurality of positive electrode plates and a plurality of negative electrode plates may be disposed respectively, and the plurality of positive electrode plates and the plurality of negative electrode plates are alternately stacked.

By way of example, a plurality of positive electrode plates may be disposed, and the negative electrode plates are folded into a plurality of stacked folded segments, and one positive electrode plate is sandwiched between adjacent folded segments.

By way of example, both the positive electrode plates and the negative electrode plates are folded to form a plurality of stacked folded segments.

By way of example, a plurality of isolation members may be disposed, which are respectively disposed between any adjacent positive electrode plates or negative electrode plates.

By way of example, the isolation members may be continuously disposed, and are disposed between any adjacent positive electrode plates or negative electrode plates in a manner of folding or winding.

In some implementations, the electrode assembly may be in a shape of a cylinder, a flat shape, or a polygon prism.

In some implementations, the electrode assembly is provided with an electrode tab, and the electrode tab may output a current from the electrode assembly. The electrode tab includes a positive electrode tab and a negative electrode tab.

In some implementations, the battery cell may include a housing. The housing is configured to package components such as the electrode assembly and the electrolyte. The housing may be a steel housing, an aluminum housing, a plastic housing (for example, polypropylene), a composite metal housing (for example, a copper-aluminum composite housing), an aluminum-plastic film, or the like. The housing includes a shell and an end cover.

By way of example, the battery cell may be a cylindrical battery cell, a prismatic battery cell, a soft pack battery cell, or a battery cell in another shape. The prismatic battery cell includes a square-housing battery cell, a blade-shaped battery cell, or a polygon prismatic battery. The polygon prismatic battery is, for example, a hexagonal prismatic battery. This is not particularly limited in the present application.

A battery mentioned in an embodiment of the present application may include one or more battery cells, to provide a single physical module with a higher voltage and capacity. When a plurality of battery cells are provided, the plurality of battery cells are connected in series, in parallel, or in series-parallel through a bus component.

In some embodiments, a battery may be a battery module. When there are a plurality of battery cells, the plurality of battery cells are arranged and fixed to form a battery module.

In some embodiments, the battery may be a battery pack. The battery pack includes a box and the battery cells, where the battery cells or the battery module are accommodated in the box.

In some embodiments, the box may be used as a part of a chassis structure of a vehicle. For example, a part of the box may become at least a part of the chassis of the vehicle, or a part of the box may become at least a part of a cross beam and a longitudinal beam of the vehicle.

Currently, when an internal short circuit or an external short circuit occurs in the battery cell due to reasons such as mechanical external force, thermal runaway occurs in the battery cell. A large amount of thermal runaway gas is instantly generated inside the battery cell. The generated gas needs to pass through the electrode assembly and mechanical components thereof inside the battery cell to reach the pressure relief mechanism, and open the pressure relief mechanism through an internal and external pressure difference, thereby implementing directional pressure relief.

However, as energy density of the battery cell continuously increases, a thermal runaway rate of the battery cell continuously increases, and a gas generation rate and a gas generation amount significantly increase. Under current design of the battery cell, non-directional pressure relief may occur in a thermal runaway process. For example, the exhaust channel in the battery cell that runs through the pressure relief mechanism is blocked, causing a shell to be broken, and a pressure of the gas is released from the broken place. The phenomenon may cause a secondary disaster of verification at a system level. For example, heat diffusion is caused because adjacent battery cells are subject to an impact, and high-voltage sparking is caused because the high-voltage wire harness is subject to an impact.

In view of this, an embodiment of the present application provides a battery cell. A support structure is disposed between the housing and the electrode assembly. The support structure is used for supporting the electrode assembly, so that an exhaust channel that is configured to guide the thermal runaway gas to the pressure relief mechanism is formed between the first wall of the housing that is provided with the pressure relief mechanism and the electrode assembly. In this way, the thermal runaway gas can be vented out of the battery cell through the pressure relief mechanism in a timely manner, thereby reducing a possibility that non-directional pressure relief occurs in the battery cell.

The technical solutions described in the embodiments of the present application are all applicable to various devices using a battery, such as mobile phones, portable devices, laptops, battery cars, electric toys, electric tools, electric vehicles, ships and spacecraft. For example, the spacecrafts include airplanes, rockets, space shuttles, and space vehicles.

It should be understood that, the technical solutions described in the embodiments of the present application are not only applicable to the foregoing devices, but also applicable to all devices using batteries. However, for the sake of brevity, in the following embodiments, electric vehicles are used as an example for description.

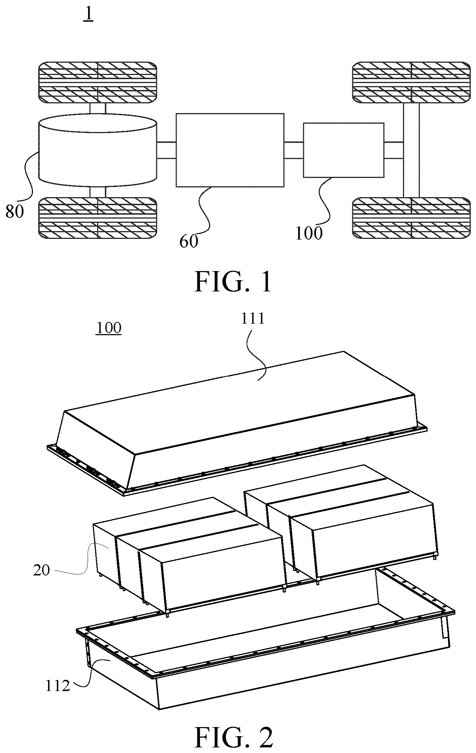

For example, FIG. 1 is a schematic diagram of a structure of a vehicle 1 according to an embodiment of the present application. The vehicle 1 may be a fuel vehicle, a gas vehicle or a new-energy vehicle. The new-energy vehicle may be a battery electric vehicle, a hybrid vehicle or an extended-range vehicle, or the like. The vehicle 1 may be internally provided with a motor 80, a controller 60, and a battery 100, and the controller 60 is configured to control the battery 100 to supply power to the motor 80. For example, the battery 100 may be disposed at the bottom, head, or tail of the vehicle 1. The battery 100 may be configured for power supply of the vehicle 1. For example, the battery 100 may serve as an operation power source of the vehicle 1 for a circuit system of the vehicle 1, for example, for a working power demand of the vehicle 1 during startup, navigation and running. In another embodiment of the present application, the battery 100 may be configured not only as an operation power supply of the vehicle 1, but also as a driving power supply of the vehicle 1, replacing or partially replacing fuel or natural gas to provide driving power for the vehicle 1.

For example, FIG. 2 is a schematic diagram of a structure of a battery 100 according to an embodiment of the present application. The battery 100 may include a plurality of battery cells 20. In addition to the battery cells 20, the battery 100 may further include a box. The box has a hollow structure, and the plurality of battery cells 20 can be accommodated in the box. As shown in FIG. 2, the box may include two portions, which are respectively referred to as a first box portion 111 and a second box portion 112, and the first box portion 111 and the second box portion 112 are fastened together. Shapes of the first box portion 111 and the second box portion 112 may be determined according to a combined shape of the plurality of battery cells 20, and at least one of the first box portion 111 and the second box portion 112 has an opening. For example, as shown in FIG. 2, only one of the first box portion 111 and the second box portion 112 is a hollow cuboid having an opening, and the other one of the first box portion 111 and the second box portion 112 is in a shape of a plate, to cover the opening. An example in which the second box portion 112 is the hollow cuboid, only one surface is an opening surface, and the first box portion 111 is in a shape of a plate is used herein. The first box portion 111 covers at the opening of the second box portion 112 to form a box 11 having a closed cavity. The cavity may be configured to accommodate the plurality of battery cells 20. After being combined in parallel or in series or in series-parallel, the plurality of battery cells 20 are disposed in the box formed by fastening the first box portion 111 and the second box portion 112.

For another example, different from FIG. 2, both the first box portion 111 and the second box portion 112 may be hollow cuboids with only one surface being an opening surface. An opening of the first box portion 111 and an opening of the second box body 112 are oppositely provided, and the first box portion 111 and the second box portion 112 are fastened with each other to form the box having the closed cavity. After being combined in parallel or in series or in series-parallel, the plurality of battery cells 20 are disposed in the box formed by fastening the first box portion 111 and the second box portion 112.

In some embodiments, the battery 100 may further include other structures. Details are not described herein again. For example, the battery 100 may further include a bus component (not shown in the figure). The bus component is configured to implement electrical connections between the plurality of battery cells 20. Specifically, the bus component may implement the electrical connections between the battery cells 20 by connecting the electrode terminals of the battery cells 20. In some embodiments, the bus component may be fixed to the electrode terminal of the battery cell 20 through soldering. Electric energy of the plurality of battery cells 20 can be further led out through an electrically conductive mechanism passing through the box. In some embodiments, the electrically conductive mechanism may also belong to the bus component.

To meet different power requirements, a quantity of battery cells 20 may be more than one. The plurality of battery cells may be in series connection, parallel connection, or series-parallel connection. The series-parallel connection refers to a combination of series connection and parallel connection. The battery 100 may also be referred to as a battery pack. In some embodiments, the plurality of battery cells may be first connected in series or in parallel or in series-parallel to form battery modules, and then a plurality of battery modules are connected in series or in parallel or in series-parallel to form the battery 100. In other words, the plurality of battery cells can directly form the battery 100, or the battery module can be formed first, and then the battery module forms the battery 100.

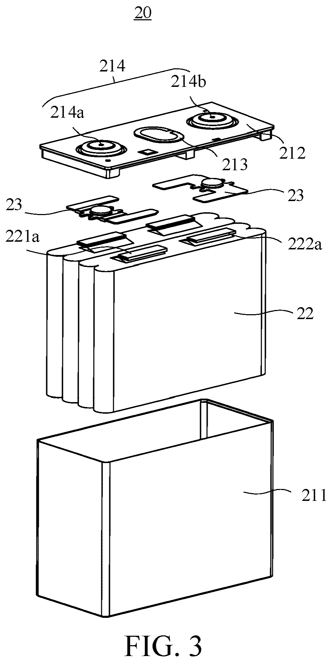

FIG. 3 is a schematic exploded diagram of a battery cell 20 according to an embodiment of the present application.

As shown in FIG. 3, the battery cell 20 includes one or more electrode assemblies 22, a shell 211, and an end cover 212. Both a wall of the shell 211 and the end cover 212 are referred to as a wall of the battery cell 20. The shell 211 is shaped according to a shape of one or more electrode assemblies 22 after combination. For example, the shell 211 may be a hollow cuboid or cube or cylinder, and one surface of the shell 211 has an opening such that one or more electrode assemblies 22 can be placed in the shell 211. For example, when the shell 211 is a hollow cuboid or cube, one plane of the shell 211 is an opening surface, that is, the plane does not have a wall, so that the inside and outside of the shell 211 are in communication with each other. When the shell 211 is a hollow cylinder, an end surface of the shell 211 is an opening surface, that is, the end surface does not have a wall, so that the inside and outside of the shell 211 are in communication with each other. The end cover 212 covers an opening and is connected to the shell 211, to form a closed cavity in which the electrode assembly 22 is placed. The shell 211 is filled with an electrolyte, such as an electrolytic solution.

The battery cell 20 further includes two electrode terminals 214. The end cover 212 is generally in a shape of a flat plate, and the two electrode terminals 214 are fixed on a flat plate surface of the end cover 212. The two electrode terminals 214 are a positive electrode terminal 214a and a negative electrode terminal 214b respectively. Each electrode terminal 214 is correspondingly provided with a connecting member 23 also referred to as a current collecting member, which is located between the end cover 212 and the electrode assembly 22 and configured to electrically connect the electrode assembly 22 to the electrode terminal 214.

As shown in FIG. 3, each electrode assembly 22 includes a first electrode tab 221a and a second electrode tab 222a. The first electrode tab 221a and the second electrode tab 222a have opposite polarities. For example, when the first electrode tab 221a is a positive electrode tab, the second electrode tab 222a is a negative electrode tab. The first electrode tab 221a of one or more electrode assemblies 22 is connected to one electrode terminal 214 via one connecting member 23, and the second electrode tab 222a of one or more electrode assemblies 22 is connected to the other electrode terminal 214 via the other connecting member 23. For example, the first electrode tab 221a is the positive electrode tab, and the second electrode tab 222a is the negative electrode tab. The positive electrode terminal 214a is connected to the first electrode tab 221a via one connecting member 23, and the negative electrode terminal 214b is connected to the second electrode tab 222a via the other connecting member 23.

In the battery cell 20, according to actual usage requirements, there may be a single or a plurality of electrode assemblies 22. As shown in FIG. 3, there are four separate electrode assemblies 22 in the battery cell 20.

By way of example, a pressure relief mechanism 213 may be further disposed on a wall of the battery cell 20. The pressure relief mechanism 213 is configured to be actuated when an internal pressure or temperature of the battery cell 20 reaches a threshold, to relieve the internal pressure or heat.

Optionally, the pressure relief mechanism 213 may be disposed on the end cover 212, or may be disposed on any wall of the shell 211.

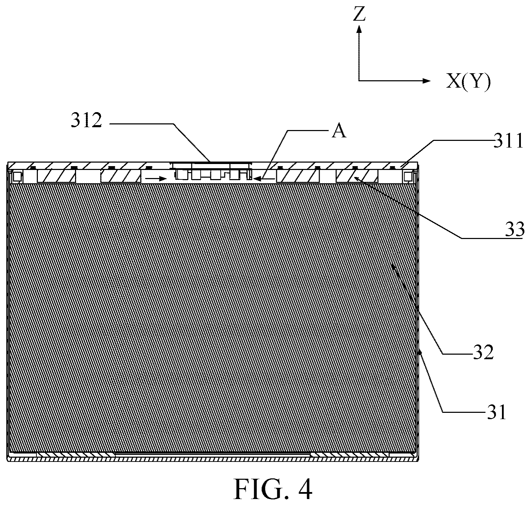

FIG. 4 is a plane cross-sectional view of a battery cell 30 according to an embodiment of the present application.

As shown in FIG. 4, the battery cell 30 includes: a housing 31, including a first wall 311, where the first wall 311 is provided with a pressure relief mechanism 312; an electrode assembly 32, accommodated in the housing 31; and a support structure 33, disposed between the housing 31 and the electrode assembly 32, where the support structure 33 is used for forming, between the first wall 311 and the electrode assembly 32, an exhaust channel A in communication with the pressure relief mechanism 312.

It should be noted that, the housing 31 may include the shell 211 and the end cover 212 that are shown in FIG. 3. The first wall 311 may be any wall of the shell 211, or may be the end cover 212. In other words, the pressure relief mechanism 213 may be disposed on any wall of the battery cell 30.

The support structure 33 is used for forming, between the first wall 311 and the electrode assembly 32, the exhaust channel A in communication with the pressure relief mechanism 312. Specifically, when thermal runaway occurs in the battery cell 30, existence of the support structure 33 may enable the first wall 311 to be separated from the electrode assembly 32, and the exhaust channel A is formed between the first wall 311 and the electrode assembly 32. The exhaust channel A may guide thermal runaway gas to the pressure relief mechanism 312, so that the thermal runaway gas is vented from the pressure relief mechanism 312 to the outside of the battery cell 30.

In this embodiment, the support structure 33 is used for forming, between the first wall 311 and the electrode assembly 32, the exhaust channel A in communication with the pressure relief mechanism 312, so that when thermal runaway occurs in the battery cell 30, the exhaust channel A can guide thermal runaway gas to reach the pressure relief mechanism 312. In this way, the thermal runaway gas can be vented from the pressure relief mechanism 312 to the outside of the battery cell 30 in a timely manner, thereby reducing a possibility that non-directional pressure relief occurs in the battery cell 30.

In some embodiments, the support structure 33 is used for supporting the electrode assembly 32.

In other words, the support structure 33 may restrict the electrode assembly 32 from moving toward the first wall 311.

For example, the support structure 33 is used for supporting the electrode assembly 32 when the thermal runaway occurs in the battery cell 30. For another example, the support structure 33 can support the electrode assembly 32 no matter whether the thermal runaway occurs in the battery cell 30. This is not limited in this embodiment of the present application.

In this embodiment, the support structure 33 is used for supporting the electrode assembly 32, so that when the thermal runaway occurs in the battery cell 30, the exhaust channel A in communication with the pressure relief mechanism 312 can still be formed between the first wall 311 and the electrode assembly 32, thereby improving the problem that the non-directional pressure relief occurs in the battery cell 30.

In some other embodiments, a melting point of the support structure 33 is higher than 100°C.

In an example, a material of the support structure 33 may be a single material. For example, the material of the support structure 33 is a single material such as an aluminum material or a copper material. In this case, the support structure 33 has a fixed melting point.

In another example, a material of the support structure 33 may be a composite material. For example, the support structure 33 may be a hybrid material of an aluminum material and a copper material. In this case, the first support member 331 does not have a fixed melting point, that is, the melting point of the support structure 33 is a melting point range of various materials. For example, if a melting point of the aluminum material is 660°C, and a melting point of copper is 1083°C, a melting point range of the support structure 33 is 660°C to 1083°C, and the melting point of the support structure 33 is higher than a melting point of the insulating member 34. It may be understood as that, a lowest melting point in the melting point range of the support structure 33 is higher than the melting point of the insulating member 34.

For example, when a positive electrode material of the battery cell is a compound having an olivine-type structure, the melting point of the support structure 33 may be higher than 150°C, so that the thermal runaway gas can smoothly reach the pressure relief mechanism 312 before a valve of the pressure relief mechanism 312 is opened. Further, optionally, the melting point of the support structure 33 is higher than 500°C, so that mechanical strength of the battery cell 30 can still be maintained in a thermal runaway process. The compound having an olivine-type structure may be selected from lithium iron phosphate, lithium iron manganese phosphate, or a mixture of lithium iron phosphate and lithium iron manganese phosphate.

For another example, when a positive electrode material of the battery cell includes a layered compound, the melting point of the support structure 33 may be higher than 100°C, so that the thermal runaway gas can smoothly reach the pressure relief mechanism 312 before a valve of the pressure relief mechanism 312 is opened. Further, optionally, the melting point of the support structure 33 is higher than 400°C, so that mechanical strength of the battery cell 30 can still be maintained in a thermal runaway process. The layered compound may be selected from a lithium nickel cobalt manganese oxygen ternary layered material, a mixture of lithium iron phosphate and a lithium nickel cobalt manganese oxygen ternary layered material, or a mixture of lithium manganese iron and a lithium nickel cobalt manganese oxygen ternary layered material.

Optionally, a material of the support structure 33 may be a high temperature resistant material. For example, the material of the support structure 33 may include at least one of materials such as metal, graphite, polytetrafluoroethylene, mica, or ceramic. In some embodiments, the support structure 33 may be directly made of a material having an insulation property, such as polytetrafluoroethylene, mica, or ceramic. In some other embodiments, a metal material may be used on the support structure 33, and an insulating layer is disposed on an outer surface of the support structure 33.

In this embodiment, the support structure 33 whose melting point is higher than 100°C is used, which helps the battery cell 30 not be easily melted when the thermal runaway occurs. Further, the exhaust channel A in communication with the pressure relief mechanism 312 can be formed between the first wall 311 and the electrode assembly 32, so that the thermal runaway gas can be vented to the outside of the battery cell 30 through the pressure relief mechanism 312 in a timely manner, thereby improving the problem that the non-directional pressure relief occurs in the battery cell 30.

It should be understood that, a position relationship between the support structure 33 and the wall of the housing 31 is not limited in the embodiments of the present application. For example, the support structure 33 is disposed between the first wall 311 and the electrode assembly 32, to directly restrict the electrode assembly 32 from moving toward the first wall 311. For another example, the support structure 33 is disposed between side walls intersecting with the first wall 311, and the electrode assembly 32 is indirectly restricted from moving toward the first wall 311 through friction force between the support structure 33 and the electrode assembly 32. It should be further understood that, a component fixedly connected to the support structure 33 is not limited in the embodiments of the present application. For example, the support structure 33 may be directly fixed on the first wall 311. For another example, the support structure 33 may be fixedly connected to the second wall intersecting with the first wall. For another example, the support structure 33 may be further fixedly connected to the insulating assembly. This is not limited in the embodiments of the present application.

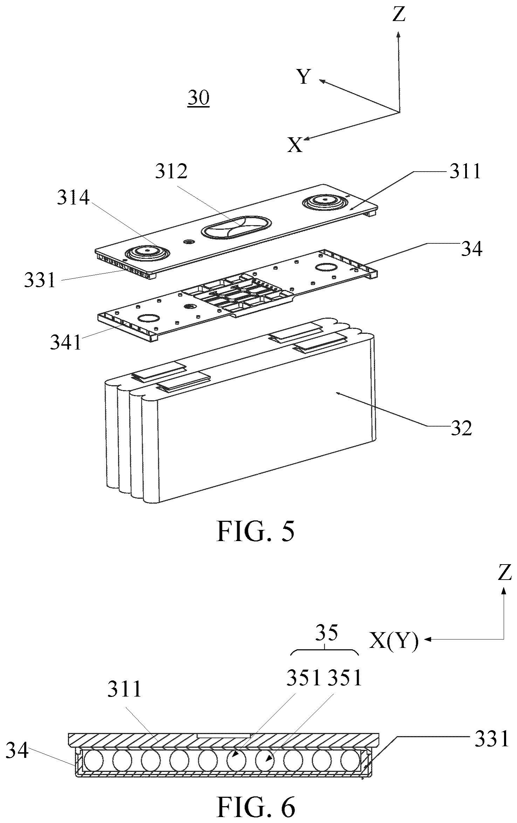

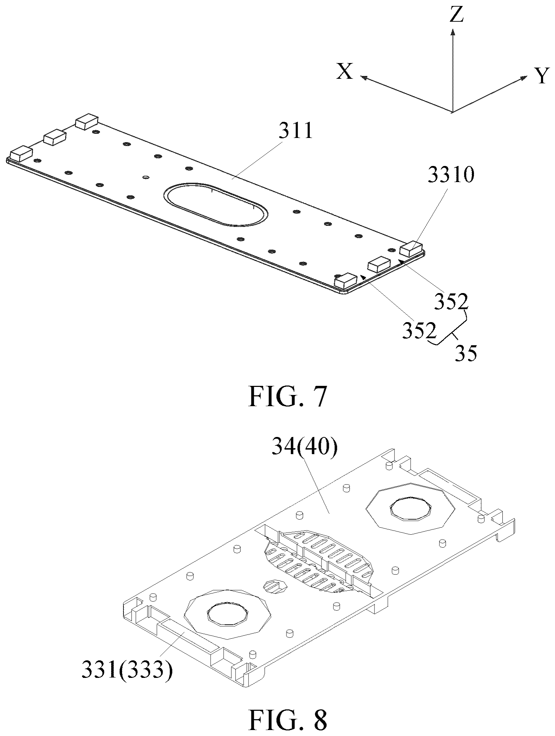

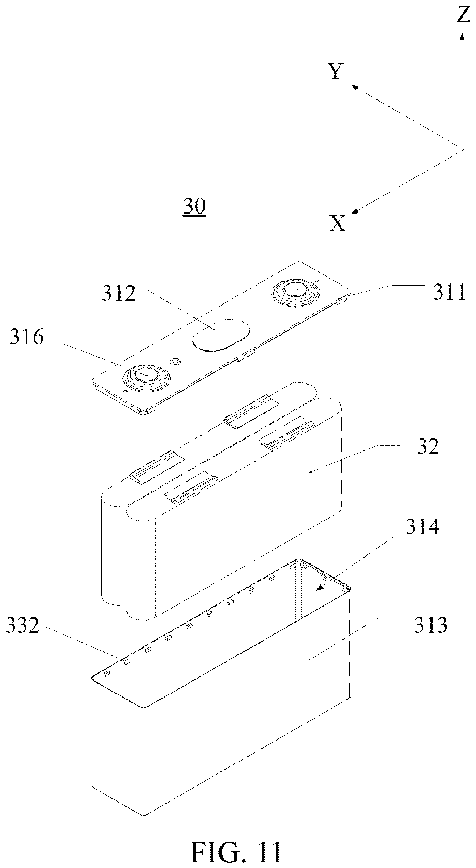

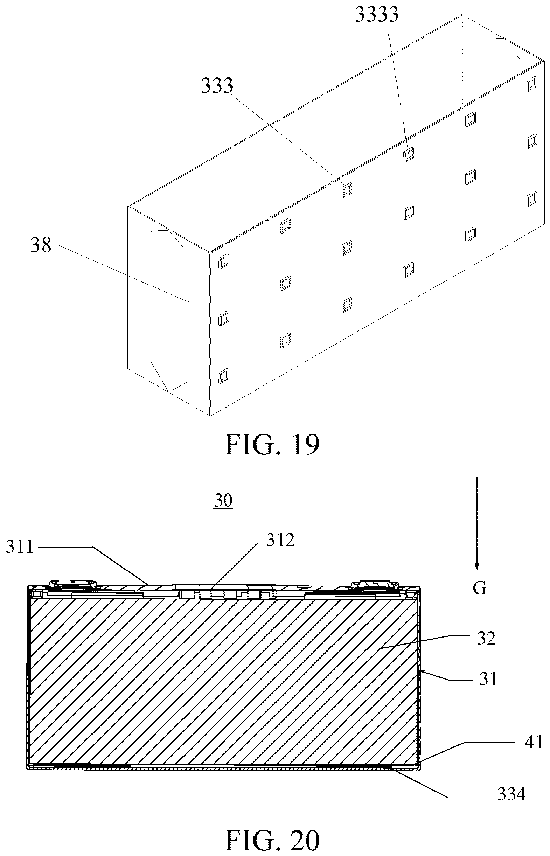

A difference is made according to a component fixedly connected to the support structure 33. FIG. 5 to FIG. 7, FIG. 9, and FIG. 10 are various schematic diagrams of an embodiment in which a support structure 33 is fixedly connected to a first wall 311. FIG. 11 to FIG. 13 are various schematic diagrams of an embodiment in which a support structure 33 is fixedly connected to a second wall 313 of a housing 31. FIG. 8 and FIG. 14 to FIG. 19 are various schematic diagrams of an embodiment in which a support structure 33 is fixedly connected to an insulating assembly 40. FIG. 20 is a schematic diagram of an embodiment in which a support structure 33 is fixedly connected to a support plate 41.

A difference is made according to a position relationship between the support structure 33 and the wall of the housing 31. FIG. 5 to FIG. 10 and FIG. 14 are various schematic diagrams of an embodiment in which a support structure 33 is disposed between a first wall 311 and an electrode assembly 32. FIG. 11 to FIG. 13, FIG. 15, FIG. 18, and FIG. 19 are various schematic diagrams of an embodiment in which a support structure 33 is disposed between a second wall 313 and an electrode assembly 32. FIG. 20 is a schematic diagram of an embodiment in which a support structure is disposed between a third wall 315 of a housing 31 that is disposed opposite to a first wall 311 and an electrode assembly 32.

Optionally, as shown in FIG. 5 to FIG. 10 and FIG. 14, the support structure 33 includes a first support member 331 disposed between the first wall 311 and the electrode assembly 32.

In this embodiment, the first support member 331 is disposed between the first wall 311 and the electrode assembly 32, so that the electrode assembly 32 can be directly limited, and when thermal runaway occurs in the battery cell 30, the electrode assembly 32 can be prevented from moving toward the first wall 311. In this way, the thermal runaway gas can reach the pressure relief mechanism 312 through the exhaust channel A formed between the first wall 311 and the electrode assembly 32, and further can be vented from the pressure relief mechanism 312 to the battery cell 30 in a timely manner, thereby reducing the possibility that the non-directional pressure relief occurs in the battery cell 30.

In an embodiment, as shown in FIG. 5, the first support member 331 is fixedly connected to the first wall 311. That is, the first support member 331 is fixed on a surface of the first wall 311 that faces the electrode assembly 32.

In an example, a material of the first support member 331 includes a metal material, and the first support member 331 may be fixedly connected to the first wall 311 in a manner of soldering.

In another example, the material of the first support member 331 includes a hard material such as a non-metal material, and the first support member 331 may be fixedly connected to the first wall 311 in a manner of bonding.

In this embodiment, the first support member 331 is fixedly connected to the first wall 311, and the first support member 331 is disposed between the first wall 311 and the electrode assembly 32, so that movement of the first support member 331 inside the battery cell 30 can be reduced, and a probability that the first support member 331 blocks the pressure relief mechanism 312 is reduced. In addition, the exhaust channel A in communication with the pressure relief mechanism 312 can be further formed between the first wall 311 and the electrode assembly 32, so that the probability that the non-directional pressure relief occurs in the battery cell 30 can be reduced.

In another embodiment, the first support member 331 and the first wall 311 can be integrally formed.

In this embodiment, the first support member 331 and the first wall 311 are integrally formed, so that binding strength between the first wall 311 and the first support member 331 can be improved, movement of the first support member 331 inside the battery cell 30 can be further reduced, and the probability that the first support member 331 blocks the pressure relief mechanism 312 is reduced.

In some examples, the first wall 311 may be the end cover.

In this embodiment, the first support member 331 and the end cover are fixed together. In comparison to fixing the first support member 331 to another wall of the housing, the first support member 331 and the end cover may be fixed together externally, or the first support member 331 is directly formed when the end cover is prepared, and the first support member 331 does not need to be extended into the housing 31 for fixing, thereby improving preparation efficiency of the battery cell 30.

Still referring to FIG. 5, as shown in FIG. 5, the battery cell 30 further includes a first insulating member 34, disposed between the electrode assembly 32 and the first wall 311. The first insulating member 34 is provided with an avoidance cavity 341, and the avoidance cavity 341 is configured to accommodate the first support member 331.

Generally, the first insulating member 34 is disposed between the first wall 311 and the electrode assembly 32, and is configured to insulate the first wall 311 and the electrode assembly 32, to implement electrical isolation between the first wall 311 and the electrode assembly 32. Optionally, a material of the first insulating member 34 may include at least one of materials such as a polypropylene (PP) material, a polyphenylene sulfide (PPS) material, or a soluble polytetrafluoroethylene (PFA) material.

Optionally, the first insulating member 34 may be provided with an avoidance cavity 341 whose opening faces the first wall 311, so that the first support member 331 fixed on a surface of the first wall 311 that faces the electrode assembly 32 is accommodated in the avoidance cavity 341.

In this embodiment, the avoidance cavity 341 is provided on the first insulating member 34 to accommodate the first support member 331, so that when insulation between the first wall 311 and the electrode assembly 32 is not affected, a space of the battery cell 30 does not need to be additionally occupied in the thickness direction Z of the first wall 311, thereby improving energy density of the battery cell 30.

In some other embodiments, the first support member 331 may be fixedly connected to the first wall 311, or the first support member 331 may be fixed in the avoidance cavity 341.

Optionally, a melting point of the first support member 331 is higher than a melting point of the first insulating member 34.

Generally, in a late stage of the thermal runaway, the first insulating member 34 may be melted, which may cause the electrode assembly 32 to move toward the first wall 311, or even to abut against the first wall 311. Therefore, the exhaust channel through which the thermal runaway gas reaches the pressure relief mechanism 312 is blocked. In this embodiment, the melting point of the first support member 331 is set to be higher than the melting point of the first insulating member 34, so that in a late stage of the thermal runaway, the first support member 331 is not easily melted, and the exhaust channel A for the thermal runaway gas to reach the pressure relief mechanism 312 can be provided, thereby reducing the probability that the non-directional pressure relief occurs in the battery cell 30.

In another embodiment, the first support member 331 is disposed between the first wall 311 and the electrode assembly 32, and the first support member 331 and the first insulating member 34 are fixed together.

For example, as shown in FIG. 8, the first insulating member 34 may be provided with an avoidance cavity 341 whose opening faces the electrode assembly 32. The first support member 331 may be fixed in the avoidance cavity 341 in a manner of interference fit. Alternatively, regardless of whether the opening of the avoidance cavity 341 faces the first wall 311 or the electrode assembly 32, the first support member 331 may be fixed in the avoidance cavity 341 in a manner of bonding.

In some examples, the first support member 331 may be in contact with the first wall 311. In some other examples, a specific gap is provided between the first support member 331 and the first wall 311.

In this embodiment, the first support member 331 is fixed in the avoidance cavity 341 of the first insulating member 34, so that movement of the first support member 331 in the battery cell 30 can be reduced, thereby reducing a probability that the first support member 331 blocks the pressure relief mechanism 312. In addition, a space of the battery cell 30 does not need to be additionally occupied in the thickness direction Z of the first wall 311, thereby improving the energy density of the battery cell 30.

Optionally, as shown in FIG. 5, FIG. 7, and FIG. 10, in a thickness direction Z of the first wall 311, a projection of the first support member 331 on the first wall 311 is disposed in an end region of the first wall 311 along a first direction, and the first direction is perpendicular to the thickness direction Z of the first wall 311.

It should be noted that, in comparison to the pressure relief mechanism 312 in the embodiments of the present application, the first support member 331 is located in the end region of the first wall 311 in the first direction. For example, the battery cell 30 includes two first support members 331, projections of the two first support members 331 on the first wall 311 are respectively disposed at two ends of the first wall 311 along the first direction, and the pressure relief mechanism 312 is disposed between the two first support members 331.

In this embodiment, in the thickness direction Z of the first wall 311, the projection of the first support member 331 on the first wall 311 is disposed in the end region of the first wall 311 in the first direction, so that a possibility that an end of the first wall 311 in the first direction abuts against the electrode assembly 32 can be reduced as much as possible, so that the thermal runaway gas inside the battery cell 30 can reach the pressure relief mechanism 312, thereby reducing the possibility that the non-directional pressure relief occurs in the battery cell 30.

In an example, the battery cell 30 is a square-shaped battery cell, and the first direction may be a length direction Z of the first wall 311, or may be a width direction of the first wall 311. Specifically, one first support member 331 may be disposed at each of two ends of the first wall 311 along a length direction X and/or each of two ends of the first wall 311 along a width direction Y.

In another example, the battery cell 30 is a cylinder-shaped battery cell, and the first direction is a radial direction of the first wall 311. Specifically, along a circumferential direction of the first wall 311, the first support members 331 are distributed at intervals at the end of the first wall 311.

Further, as shown in FIG. 5 to FIG. 7 and FIG. 9, a gap 36 is provided between the electrode assembly 32 and the housing 31 in the first direction, the first support member 331 is provided with a first empty cavity 35 that runs through along the first direction, and the first empty cavity 35 is configured to communicate the gap 36 with the pressure relief mechanism 312.

In this embodiment, the first support member 331 is provided with the first empty cavity 35 that runs through along the first direction, and the first empty cavity 35 is configured to communicate the gap 36 with the pressure relief mechanism 312, to guide the thermal runaway gas accumulated in the gap 36 to the pressure relief mechanism 312, thereby reducing the possibility that the thermal runaway gas accumulated in the gap 36 cannot be vented in a timely manner and consequently the housing 31 is burst.

In an example, as shown in FIG. 6, the first support member 331 is provided with at least one first through hole 351 that runs through along the first direction, and the first empty cavity 35 includes the at least one first through hole 351.

Optionally, the first support member 331 is provided with a plurality of first through holes 351. The plurality of first through holes 351 may be provided at intervals along the second direction. The second direction is perpendicular to both the thickness direction Z of the first wall 311 and the first direction. For example, if the first direction is the length direction X of the first wall 311, the second direction is the width direction Y of the first wall 311. For another example, if the first direction is the width direction Y of the first wall 311, the second direction is the length direction X of the first wall 311.

Optionally, the first support member 331 may also be provided with a large first through hole 351, to enlarge a vent area as much as possible, and reduce the weight of the battery cell 30, thereby improving the energy density of the battery cell 30.

In this embodiment, the at least one first through hole 351 that runs through along the first direction is provided on the first support member 331 to form the first empty cavity 35, so that the possibility that the thermal runaway gas accumulated in the gap 36 cannot be vented in a timely manner and consequently the housing 31 is burst can be reduced. In addition, a weight of the battery cell 30 can also be reduced, and the energy density of the battery cell 30 can also be improved.

In another example, as shown in FIG. 7, the first support member 331 includes a plurality of first support blocks 3310 disposed at intervals in a second direction, the first empty cavity 35 includes an interval 352 between every two adjacent first support blocks 3310 of the plurality of first support blocks 3310, the second direction is perpendicular to the thickness direction of the first wall 311, and the second direction is perpendicular to the first direction.

In this embodiment, the plurality of first support blocks 3310 disposed at intervals in the second direction are configured to form the first empty cavity 35, so that the possibility that the thermal runaway gas accumulated in the gap 36 cannot be vented in a timely manner and consequently the housing 31 is burst can be reduced. In addition, a weight of the battery cell 30 can also be reduced, and the energy density of the battery cell 30 can also be improved.

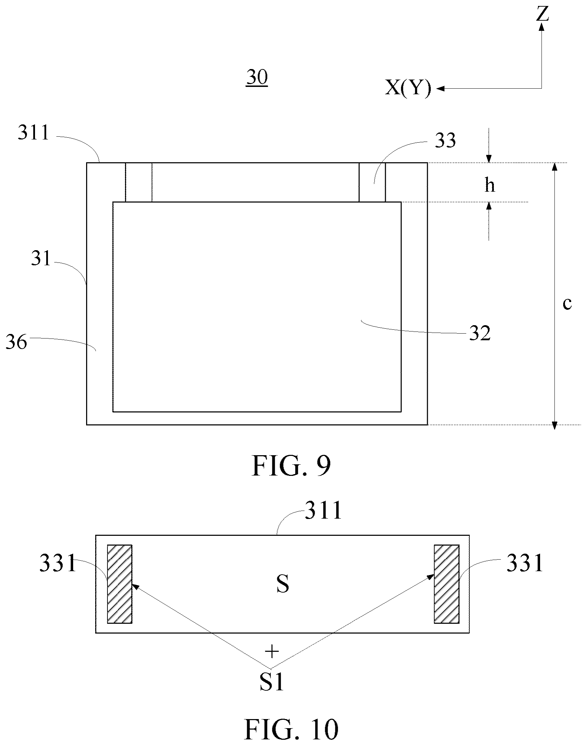

Optionally, as shown in FIG. 9, in the thickness direction Z of the first wall 311, a size h of the first support member 331 and a size c of the battery cell satisfy: 0.003≤h/c≤0.13.

In this embodiment, if h/c is less than 0.003, blocking easily occurs due to particles or plates generated due to runaway inside the battery cell 30, and consequently, the purpose of forming the exhaust channel A cannot be achieved. However, when h/c is greater than 0.13, the energy density of the battery cell 30 is seriously sacrificed. When h/c is set between 0.003 and 0.13, the energy density of the battery cell 30 can be balanced and the exhaust channel A is formed between the first wall 311 and the electrode assembly 32.

A technical effect achieved by 0.003≤h/c≤0.13 is described in detail below with reference to specific embodiments.

Specifically, a size of the shell of the battery cell is 44 mm*220 mm*100 mm (width*length*height), and the energy density is 250 Wh/kg. An end cover (for example, a first wall) having a first support member is manufactured by machining. The end cover has a pressure relief mechanism. The first support member is two regular quadrangular prisms that are symmetrically distributed, are respectively located at two ends of a short side of the end cover, have a length of 41 mm, and are respectively 0.5 mm away from a long side of the end cover. A distance between the first support member and the short side of the end cover is 7 mm. First support members of different heights are separately manufactured. Then, the battery cell is triggered to run away through a built-in heating film, and a condition of directional pressure relief of the battery cell is observed. A valve opening pressure of the pressure relief mechanism is 1.0 Mpa, and weld strength of the end cover is 1.5 Mpa. In addition, an internal air pressure condition of the battery cell is detected through the end cover and a vent tube on a side surface. Data is shown in Table 1.

**Table 1**

| h (mm) | h/c | Maximum pressure (MPa) below an end cover | Maximum pressure (MPa) on a side surface | Results of tests |
|---|---|---|---|---|
| 0.1 | 0.001 | 1.03 | 1.62 | Weld on a side surface fails |
| 0.2 | 0.002 | 1.12 | 1.56 | Weld on a side surface fails |
| 0.3 | 0.003 | 1.05 | 1.34 | A pressure relief mechanism is normally opened and a shell is intact |
| 1 | 0.01 | 1.12 | 1.24 | The pressure relief mechanism is normally opened and the shell is intact |
| 2 | 0.02 | 1.05 | 1.3 | The pressure relief mechanism is normally opened and the shell is intact |
| 5 | 0.05 | 1.09 | 1.32 | The pressure relief mechanism is normally opened and the shell is intact |
| 10 | 0.1 | 1.11 | 1.26 | The pressure relief mechanism is normally opened and the shell is intact |
| 13 | 0.13 | 1.12 | 1.12 | The pressure relief mechanism is normally opened and the shell is intact |
| 13.5 | 0.135 | 1.08 | 1.02 | The pressure relief mechanism is normally opened and the shell is intact, but energy density loss is severe. |

It can be learned from Table 1 that, when h/c is equal to 0.001 and 0.002, the weld on the side surface of the shell fails; when h/c is equal to 0.135, the pressure relief mechanism is normally opened and the shell is intact, but the energy density loss is severe; however, when h/c is equal to 0.003, 0.01, 0.02, 0.05, 0.1, and 0.13, the pressure relief mechanism is normally opened and the shell is intact.

Further, optionally, 0.03≤h/c≤0.08.

Optionally, as shown in FIG. 10, a plurality of first support members 331 are disposed between the first wall 311 and the electrode assembly 32, and in the thickness direction Z of the first wall 311, a total projection area S1 of the plurality of first support members 331 on the first wall 311 and an area S of the first wall satisfy: 0.012≤S1/S≤0.26.

In this embodiment, when S1/S is less than 0.012, and when the thermal runaway occurs in the battery cell 30, a contact area between the first support member 331 and the first wall 311 is excessively small. Sufficient mechanical support cannot be provided for the electrode assembly 32. This may cause a case in which the internal electrode assembly 32 shakes or overlaps with the first wall 311, and even further worsens a venting path. However, when S1/S is greater than 0.26, the weight of the battery cell is increased, and the energy density is sacrificed. In addition, due to occupation of the inside of the battery cell 30 by the first support member 331, the free space is further reduced, which is not beneficial to directional pressure relief. S1/S is set between 0.012 and 0.26, so that the energy density of the battery cell 30 can be balanced and the exhaust channel A is formed between the first wall 311 and the electrode assembly 32.

A technical effect achieved by 0.012≤S1/S≤0.26 is described in detail below with reference to specific embodiments.

Specifically, a size of the shell of the battery cell is 44 mm*220 mm*100 mm (width*length*height), and the energy density is 250 Wh/kg. An end cover (for example, a first wall) having a first support member is manufactured by machining. The end cover has a pressure relief mechanism. The first support member is two regular quadrangular prisms that are symmetrically distributed, are respectively located at two ends of a short side of the end cover, have a length of 41 mm, and have a height of 1 mm. A width is used as a variable to adjust S1. Then, the battery cell is triggered to run away through a built-in heating film, and a condition of directional pressure relief of the battery cell is observed. A valve opening pressure of the pressure relief mechanism is 1.0 Mpa, and weld strength of the end cover is 1.5 Mpa. In addition, an internal air pressure condition of the battery cell is detected through the end cover and a vent tube on a side surface. Data is shown in Table 2.

**Table 2**

| S1 (mm²) | S (mm²) | S₁/S | Maximum pressure (MPa) below a top cover | Maximum pressure (MPa) on a side surface | Results of tests |
|---|---|---|---|---|---|
| 41 | 9680 | 0.0042 | 1.53 | 1.24 | Weld on an end cover fails |
| 82 | | 0.0085 | 1.42 | 1.21 | Weld on a side surface fails |
| 116 | | 0.012 | 1.25 | 1.34 | A pressure relief mechanism is normally opened and a shell is |
| | | | | | intact |
| 123 | | 0.013 | 1.12 | 1.14 | The pressure relief mechanism is normally opened and the shell is intact |
| 200 | | 0.021 | 1.15 | 1.31 | The pressure relief mechanism is normally opened and the shell is intact |
| 500 | | 0.053 | 1.04 | 1.22 | The pressure relief mechanism is normally opened and the shell is intact |
| 1000 | | 0.11 | 1.31 | 1.36 | The pressure relief mechanism is normally opened and the shell is intact |
| 2000 | | 0.22 | 1.32 | 1.42 | The pressure relief mechanism is normally opened and the shell is intact |
| 2500 | | 0.26 | 1.36 | 1.28 | The pressure relief mechanism is normally opened and the shell is intact |
| 2900 | | 0.30 | 1.42 | 1.62 | Weld on a side surface fails |
| 3000 | | 0.31 | 1.44 | 1.57 | Weld on a side surface fails |

It can be learnt from Table 2 that, when S1/S is equal to 0.0042, the weld on the end cover fails; when S1/S is equal to 0.0085, the weld on the side surface fails; when S1/S is equal to 0.3 and 0.31, the weld on the side surface fails; however, when S1/S is equal to 0.012, 0.013, 0.021, 0.053, 0.11, 0.22, and 0.26, the pressure relief mechanism is normally opened and the shell is intact.

Further, optionally, 0.08≤S1/S≤0.2.

As shown in FIG. 11 to FIG. 13, FIG. 15, FIG. 18, and FIG. 19, the housing 31 further has a second wall 313. The second wall 313 intersects with the first wall 311, and the support structure 33 is disposed between the second wall 313 and the electrode assembly 32.

Optionally, that the second wall 313 intersects with the first wall 311 means that a preset angle is formed between the second wall 313 and the first wall 311. For example, 90 degrees is formed between the second wall 313 and the first wall 311, or the second wall 313 and the first wall 311 are perpendicular to each other. In another embodiment, another angle, for example, 75 degrees, may also be formed between the second wall 313 and the first wall 311. This is not limited in this embodiment of the present application.

In some embodiments, the battery cell 30 is a square-shaped battery cell, and the second wall 313 includes a wall of the housing 31 that is perpendicular to the length direction X of the first wall 311, and/or the second wall 313 includes a wall of the housing 31 that is perpendicular to the width direction Y of the first wall 311.

In some other embodiments, the battery cell 30 is a cylinder-shaped battery cell, and the second wall 313 may include a side wall of the housing 31.

Optionally, as shown in FIG. 11 to FIG. 13, the second support member 332 is fixedly connected to the second wall 313.

Optionally, the second support member 332 may be fixedly connected to the second wall 313 in a manner of soldering. Alternatively, the second support member 332 may be fixedly connected to the second wall 313 in another manner such as snapping, bonding, or riveting.

In this embodiment, the second support member 332 is fixedly disposed on the second wall 313 of the housing 31 that is perpendicular to the first wall 311, to support the electrode assembly 32. This helps prevent the end of the electrode assembly 32 from moving toward the first wall 311 when the thermal runaway occurs in the battery cell 30, thereby improving the probability of forming the exhaust channel A between the first wall 311 and the electrode assembly 32 when the thermal runaway occurs in the battery cell 30.

In some other embodiments, the first support member 331 and the second support member 332 may be combined with each other. That is, the battery cell 30 includes both the first support member 331 shown in FIG. 5 to FIG. 10, and the second support member 332 shown in FIG. 11.

Still referring to FIG. 11, the second wall 313 forms an accommodating space including an opening 314, the first wall 311 covers the opening 314 to enable the electrode assembly 32 to be disposed in the accommodating space, and the second support member 332 is disposed at the opening 314.

In this embodiment, the second support member 332 is disposed at the opening 314 of the accommodating space formed by the second wall 313, so that a probability that the end of the electrode assembly 32 is prevented from moving toward the first wall 311 can be improved, thereby improving the probability that the exhaust channel A is formed between the first wall 311 and the electrode assembly 32 when the thermal runaway occurs in the battery cell 30.

In some other examples, the second support member 332 may be disposed between the second wall 313 and a surface of the electrode assembly 32 that is parallel to the second wall 313, and the second support member 332 may be located at different positions of the second wall 313 along the thickness direction Z of the first wall 311. For example, in the thickness direction Z of the first wall 311, the second support member 332 may be disposed in a region of the second wall 313 that is away from the first wall 311. For another example, in the thickness direction Z of the first wall 311, the second support member 332 may be disposed in a middle region of the second wall 313. In this embodiment, existence of the second support member 332 may enable a gap to be provided between the electrode assembly 32 and the second wall 313 of the housing 31. The gap may be the gap 36 shown in FIG. 9. In other words, the gap 36 in FIG. 9 may be formed by the second support member 332.

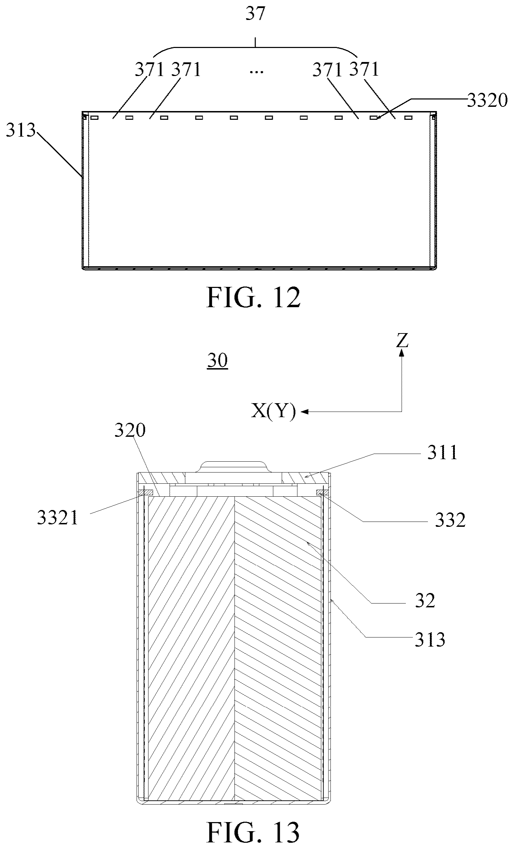

Optionally, as shown in FIG. 12, the second support member 332 is provided with a second empty cavity 37 that runs through along the thickness direction Z of the first wall 311, and the second empty cavity 37 is configured to guide thermal runaway gas accumulated between the second wall 313 and the electrode assembly 32 to the exhaust channel A.

In this embodiment, the second empty cavity 37 that runs through along the thickness direction Z of the first wall 311 is provided on the second support member 332, so that the second support member 332 can support the electrode assembly 32, to reduce the possibility that the end of the electrode assembly 32 moves toward the first wall 311, and the thermal runaway gas accumulated between the second wall 313 and the electrode assembly 32 can be guided to the exhaust channel A through the second empty cavity 37, thereby reducing the possibility that the non-directional pressure relief occurs in the battery cell 30.

It should be noted that, for implementation of the second empty cavity 37 of the second support member 332, refer to the first empty cavity 35 of the first support member 331.

For example, as shown in FIG. 12, the second support member 332 includes a plurality of second support blocks 3320 disposed at intervals along a circumferential direction of the opening 314, and the second empty cavity 37 includes an interval 371 between every two adjacent second support blocks 3320 of the plurality of second support blocks 3320.

For another example, at least one through hole that runs through along the thickness direction Z of the first wall 311 may also be provided on the second support member 332. The second empty cavity 37 includes the at least one through hole.

In some embodiments, along the thickness direction Z of the first wall 311, the plurality of second support blocks 3320 may not be disposed at the opening 314. In some other embodiments, along the thickness direction Z of the first wall 311, the plurality of second support blocks 3320 may alternatively be disposed at different positions of the second wall 313.

In this embodiment, the plurality of second support blocks 3320 disposed at intervals along the circumferential direction of the opening 314 to form the second empty cavity 37, so that the possibility that the thermal runaway gas accumulated between the second wall 313 and the electrode assembly 32 cannot be vented in a timely manner and consequently the housing 31 is burst can be reduced.

In an example, if the battery cell 30 is a square-shaped battery cell, the second wall 313 may include only side walls oppositely disposed along the length direction X, or the second wall 313 may include only side walls oppositely disposed along the width direction Y.

Optionally, as shown in FIG. 13, in the thickness direction Z of the first wall 311, a surface 3321 of the second support member 332 that is away from the first wall 311 is closer to the first wall 311 than a surface 320 of the electrode assembly 32 that is close to the first wall 311; and in the thickness direction Z of the first wall 311, a projection of the second support member 332 on the first wall 311 intersects with a projection of the electrode assembly 32 on the first wall 311.

In this embodiment, in the thickness direction Z of the first wall 311, the projection of the second support member 332 on the first wall 311 intersects with the projection of the electrode assembly 32 on the first wall 311, and the second support member 332 is closer to the first wall 311 than the electrode assembly 32 is, so that when the thermal runaway occurs in the battery cell 30, the second support member 332 can block the electrode assembly 32 from approaching the first wall 311. In this way, the exhaust channel A can be formed between the first wall 311 and the electrode assembly 32, thereby reducing the possibility that the non-directional pressure relief occurs in the battery cell 30.

As shown in FIG. 8 and FIG. 14 to FIG. 19, the battery cell 30 further includes: an insulating assembly 40, disposed between the housing 31 and the electrode assembly 32, and configured to insulate the housing 31 and the electrode assembly 32; and the support structure 33 includes a third support member 333, the third support member 333 is fixedly connected to the insulating assembly 40, and the third support member 333 is disposed between the housing 31 and the insulating assembly 40.

In this embodiment, the third support member 333 is disposed between the housing and the insulating assembly 40 that is disposed between the housing 31 and the electrode assembly 32, and the third support member 333 is fixedly connected to the insulating assembly 40, to support the electrode assembly 32. This is beneficial to reducing the probability that the electrode assembly 32 moves toward the first wall 311 when the thermal runaway occurs in the battery cell, thereby improving the probability that the exhaust channel A is formed between the first wall 311 and the electrode assembly 32.

In an embodiment, as shown in FIG. 8, the insulating assembly 40 includes a first insulating member 34 disposed between the first wall 311 and the electrode assembly 32. In this case, the third support member may be a first support member 331, and is fixedly connected to the first insulating member 34. For details about this embodiment, refer to the descriptions about FIG. 8, and for brevity, details are not described herein again.

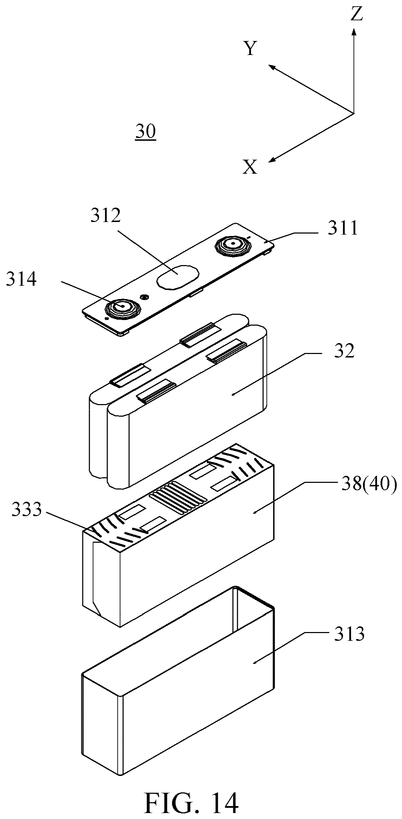

In another embodiment, as shown in FIG. 14 to FIG. 19, the insulating assembly 40 includes a second insulating member 38, the second insulating member 38 is covered on an outer surface of the electrode assembly 32, and the third support member 333 is fixedly connected to the second insulating member 38.

To better isolate the electrode assembly 32 and the housing 31, an outer surface of the electrode assembly 32 is usually covered with an insulating film, namely, the second insulating member 38 in this embodiment of the present application. For example, the second insulating member 38 may be a mylar film.

Optionally, as shown in FIG. 14, the third support member 333 may be fixedly disposed on a surface that is of the second insulating member 38 and that is perpendicular to the thickness direction Z of the first wall 311 and is closer to the first wall 311, so that the third support member 333 is disposed between the first wall 311 and the electrode assembly 32.

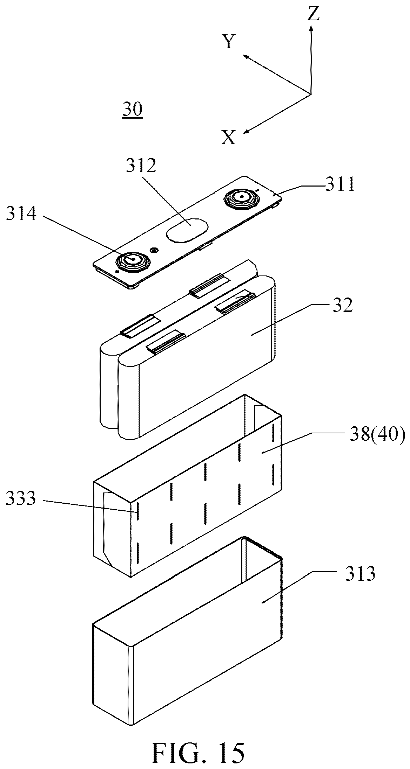

Optionally, as shown in FIG. 15, the third support member 333 may also be fixedly disposed on a surface of the second insulating member 38 that is perpendicular to the first wall 311, so that the third support member 333 is disposed between the second wall 313 and the electrode assembly 32.

In this embodiment, the third support member 333 is fixedly connected to the second insulating member 38 covered on the outer surface of the electrode assembly 32, to support the electrode assembly 32. This is beneficial to reducing the probability that the electrode assembly 32 moves toward the first wall 311 when the thermal runaway occurs in the battery cell 30, thereby improving the probability that the exhaust channel A is formed between the first wall 311 and the electrode assembly 32.

In an example, when the third support member 333 is fixedly disposed on the surface of the second insulating member 38 that is perpendicular to the first wall 311, existence of the third support member 333 enables a gap to be provided between the second wall 313 and the second insulating member 38. That is, the gap 36 shown in FIG. 4 may be implemented by the third support member 333.

In another example, when the third support member 333 is fixedly disposed on the surface that is of the second insulating member 38 and that is perpendicular to the thickness direction Z of the first wall 311 and is closer to the first wall 311, an opening of the avoidance cavity 341 in the second insulating member 34 shown in FIG. 5 may face the electrode assembly 32, and the third support member 333 is accommodated in the avoidance cavity 341.

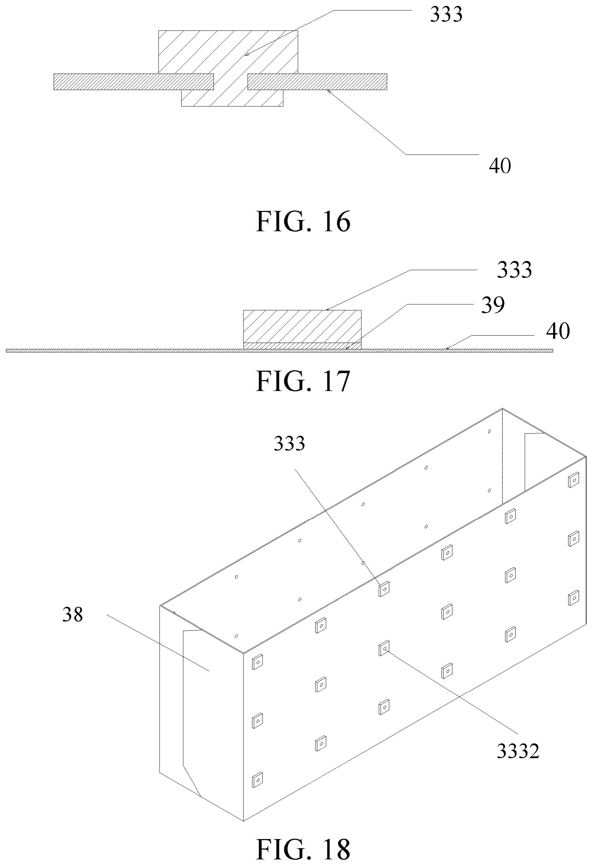

Optionally, as shown in FIG. 18, the third support member 333 has a second through hole 3332. The second through hole 3332 is configured to enable the thermal runaway gas generated by the electrode assembly 32 to be released between the second insulating member 38 and the housing 31.

Optionally, the second through hole 3332 may be further configured to be immersed in an electrolytic solution.

In this embodiment, the second through hole 3332 is provided in the third support member 333, so that the thermal runaway gas generated by the electrode assembly 32 can be released between the second insulating member 38 and the housing 31 in a timely manner, to further guide the thermal runaway gas to the exhaust channel A. In this way, the thermal runaway gas is vented out through the pressure relief mechanism 312.

Optionally, as shown in FIG. 19, the third support member 333 is provided with a groove 3333 whose opening faces the housing 31.

Optionally, a cross-sectional shape of the groove 3333 may be a circle, or may be a square. This is not limited in the embodiments of the present application.

In some embodiments, the second through hole 3332 and the groove 3333 may also be combined with each other. For example, the second through hole 3332 is provided on a bottom wall of the groove 3333.

In this embodiment, the third support member 333 is provided with the groove 3333 whose opening faces the housing 31, so that accommodating space of the thermal runaway gas can be enlarged, and the weight of the battery cell 30 can be further reduced, thereby improving the energy density of the battery cell 30.

In an example, as shown in FIG. 16, the third support member 333 may be fixedly connected to the insulating assembly 40 in a manner of snapping. For example, the third support member 333 is provided with a protrusion, and the second insulating member is provided with a groove or a through hole, which cooperate with each other.

In this embodiment, the third support member 333 is fixedly connected to the insulating assembly 40 in a manner of snapping, so that the binding strength between the third support member 333 and the insulating assembly 40 can be improved, and the probability that the third support member 333 moves inside the battery cell 30 to block the exhaust channel A is reduced.

In another example, as shown in FIG. 17, the third support member 333 may be fixedly connected to the insulating assembly 40 in a manner of bonding. For example, the third support member 333 is fixedly connected to the insulating assembly 40 through a fixing adhesive 39.

In this embodiment, the third support member 333 can be fixedly connected to the insulating assembly 40 in a manner of bonding, so that the binding strength between the third support member 333 and the insulating assembly 40 can be improved, and the probability that the third support member 333 moves inside the battery cell 30 to block the exhaust channel A is reduced.

As shown in FIG. 20, the battery cell 30 further includes a support plate 41 that is disposed below the electrode assembly 32 along the gravity direction G. The support structure 33 includes a fourth support member 334. The fourth support member 334 is disposed below the electrode assembly 32 along the gravity direction G, and a melting point of the fourth support member 334 is higher than a melting point of the support plate 41.

The support plate 41, which may also be referred to as a bottom protection plate, is usually in a structure of a flat plate shape, is disposed at the bottom of the battery cell, and is configured to support and protect the electrode assembly.

Optionally, the fourth support member 334 may be disposed between the electrode assembly 32 and the support plate 41, or may be disposed between the support plate 41 and a wall of the housing 31.

In some embodiments, a gravity direction G may also be considered as the thickness direction Z of the first wall 311. In this case, the first wall 311 may be a wall closer to the support plate 41 along the gravity direction G. For example, the first wall 311 may be a bottom wall of the housing 31. Alternatively, the first wall 311 may be a wall of the housing 31 that is farther away from the support plate 41 along the gravity direction G. For example, the first wall 311 may be a top wall of the housing 31.

In addition, the support plate 41 may be a metal material, or may be another material that can support the electrode assembly 32. In the embodiments of the present application, the melting point of the fourth support member 334 is higher than the melting point of the support plate 41. When the thermal runaway occurs in the battery cell 30, even if the support plate 41 is melted, the fourth support member 334 is not easily melted, and can still function to support the electrode assembly 32, and form the space for accommodating the thermal runaway gas, thereby reducing the possibility that the non-directional pressure relief occurs in the battery cell 30.

Optionally, the fourth support member 334 is fixedly connected to the support plate 41.

In this embodiment, the fourth support member 334 is fixedly connected to the support plate 41, which helps form the space accommodating the thermal runaway gas between the electrode assembly 32 and the support plate 41, thereby reducing the possibility that the non-directional pressure relief occurs in the battery cell 30.

In another embodiment, the fourth support member 334 may alternatively be fixedly connected to a wall that is of the housing 31 and that is disposed opposite to the first wall 311 along the thickness direction Z of the first wall 311. For example, the fourth support member 334 may be fixedly connected to a bottom wall of the housing 31.

It should be noted that, the first support member 331, the second support member 332, the third support member 333, and the fourth support member 334 in the embodiments of the present application may be combined with each other. This is not limited in the embodiments of the present application.

Optionally, as shown in FIG. 5, FIG. 11, FIG. 14, and FIG. 15, the battery cell 30 further includes an electrode terminal 316, disposed on a first wall 311, where the electrode terminal 316 is electrically connected to the electrode assembly 32.

In this embodiment, an electrical connection can be implemented to another battery cell through an electrical connection between the electrode terminal 316 of the first wall 311 and the electrode assembly 32, to expand a capacity of the battery.

Optionally, in some embodiments, the electrode terminal 316 may be disposed on a side of the first wall 311 that is away from the electrode assembly 32, to reduce occupation of an internal space of the battery cell 30, thereby improving the energy density of the battery cell 30.

Referring to FIG. 4 to FIG. 20 again, the battery cell 30 includes: a housing 31, including a first wall 311, where the first wall 311 is provided with an electrode terminal 316 and a pressure relief mechanism 312, and the electrode terminal 316 is disposed outside the housing 31; an electrode assembly 32, accommodated in the housing 31 and electrically connected to the electrode terminal 316; and a support structure 33, disposed between the electrode assembly 32 and the housing 31, where the support structure 33 is used for forming, between the first wall 311 and the electrode assembly 32, an exhaust channel A in communication with the pressure relief mechanism 312. The support structure 33 includes a first support member 331 that is disposed between the first wall 311 and the electrode assembly and that is fixed on the first wall 311 and a second support member 332 that is disposed between the second wall 313 of the housing 31 and the electrode assembly 32 and that is fixed on the second wall 313. The second wall 313 is perpendicular to the first wall 311. The battery cell 30 further includes a first insulating member 34, disposed between the electrode assembly 32 and the first wall 311. The first insulating member 34 is provided with an avoidance cavity 341, and the avoidance cavity 341 is configured to accommodate the first support member 331. A melting point of the first support member 331 is higher than a melting point of the first insulating member 34. In a thickness direction Z of the first wall 311, a projection of the first support member 331 on the first wall 311 is disposed in an end region of the first wall 311 along a first direction, and the first direction is perpendicular to the thickness direction Z of the first wall 311. A gap 36 is provided between the electrode assembly 32 and the housing 31 in the first direction, the first support member 331 is provided with a first empty cavity 35 that runs through along the first direction, and the first empty cavity 35 is configured to communicate the gap 36 with the pressure relief mechanism 312.

In this embodiment, the first support member 331 is disposed between the first wall 311 and the electrode assembly 32 to support the electrode assembly 32, so that the exhaust channel A that guides the thermal runaway gas to the pressure relief mechanism 312 is formed between the first wall 311 and the electrode assembly 32, and the thermal runaway gas can be vented out in a timely manner through the pressure relief mechanism 312, thereby reducing the probability that the non-directional pressure relief occurs in the battery cell 30. In addition, the second support member 332 is disposed between the second wall 313 and the electrode assembly 32, so that a gap 36 for accommodating the thermal runaway gas can be formed between the second wall 313 and the electrode assembly 32, and the first empty cavity 35 provided by the first support member 331 communicates the gap 36 with the pressure relief mechanism 312. In this way, the thermal runaway gas can be further vented out in a timely manner through the pressure relief mechanism 312, thereby reducing the probability that the non-directional pressure relief occurs in the battery cell 30. In addition, the first support member 331 is accommodated in the avoidance cavity 341 of the first insulating member 34, so that the energy density of the battery cell 30 can be improved. In addition, because a melting point of the first support member 331 is higher than a melting point of the first insulating member 34, when the thermal runaway occurs in the battery cell 30, even if the first insulating member 34 is melted and causes the electrode assembly 32 to move close to the first wall 311, the first support member 331 is not melted and blocks movement of the electrode assembly 32, so that the exhaust channel that guides the thermal runaway gas to the pressure relief mechanism 312 can still be formed between the first wall 311 and the electrode assembly 32.

Optionally, the battery cell 30 may further include another component, for example, the connecting member 23 shown in FIG. 3. For brevity, details are not described herein again.

An embodiment of the present application further provides a battery. The battery includes at least one battery cell 30 in the embodiments of the present application.

An embodiment of the present application further provides a power consuming apparatus, including the battery in the foregoing embodiments. The battery is configured to supply electric energy to the power consuming apparatus.

The power consuming apparatus may be the vehicle shown in FIG. 1, or may be any device in which the battery is used.

Although the present application has been described with reference to the preferred embodiments, various modifications may be made thereto and components thereof may be replaced with equivalents without departing from the scope of the present application. Especially, as long as there is no structural conflict, the various technical features mentioned in each embodiment can be combined in any way. The present application is not limited to the particular embodiments disclosed herein, but includes all technical solutions that fall within the scope of the claims.

## Claims

1. A battery cell, comprising:
a housing, comprising a first wall, wherein the first wall is provided with a pressure relief mechanism;
an electrode assembly, accommodated in the housing; and
a support structure, disposed between the housing and the electrode assembly, wherein the support structure is used for forming, between the first wall and the electrode assembly, an exhaust channel in communication with the pressure relief mechanism.

2. The battery cell according to claim 1, wherein the support structure is used for supporting the electrode assembly.

3. The battery cell according to claim 1 or 2, wherein a melting point of the support structure is higher than 100°C.

4. The battery cell according to any one of claims 1 to 3, wherein the support structure comprises a first support member disposed between the first wall and the electrode assembly.

5. The battery cell according to claim 4, wherein the first support member is fixedly connected to the first wall.

6. The battery cell according to claim 4, wherein the first support member and the first wall are integrally formed.

7. The battery cell according to any one of claims 4 to 6, wherein the battery cell further comprises:
a first insulating member, disposed between the electrode assembly and the first wall, wherein
the first insulating member is provided with an avoidance cavity, and the avoidance cavity is configured to accommodate the first support member.

8. The battery cell according to any one of claims 4 to 7, wherein the battery cell further comprises the first insulating member, the first insulating member is configured to insulate the first wall and the electrode assembly, and a melting point of the first support member is higher than a melting point of the first insulating member.

9. The battery cell according to any one of claims 4 to 8, wherein in a thickness direction of the first wall, a projection of the first support member on the first wall is disposed in an end region of the first wall along a first direction, and the first direction is perpendicular to the thickness direction of the first wall.

10. The battery cell according to claim 9, wherein a gap is provided between the electrode assembly and the housing in the first direction, the first support member is provided with a first empty cavity that runs through along the first direction, and the first empty cavity is configured to communicate the gap with the pressure relief mechanism.

11. The battery cell according to claim 10, wherein the first support member is provided with at least one first through hole that runs through along the first direction, and the first empty cavity comprises the at least one first through hole.

12. The battery cell according to claim 10, wherein the first support member comprises a plurality of first support blocks disposed at intervals in a second direction, the first empty cavity comprises an interval between every two adjacent first support blocks of the plurality of first support blocks, the second direction is perpendicular to the thickness direction of the first wall, and the second direction is perpendicular to the first direction.

13. The battery cell according to any one of claims 4 to 12, wherein in the thickness direction of the first wall, a size h of the first support member and a size c of the battery cell satisfy: 0.003≤h/c≤0.13.

14. The battery cell according to any one of claims 4 to 13, wherein at least one first support member is disposed between the first wall and the electrode assembly, and in the thickness direction of the first wall, a total projection area S1 of the at least one first support member on the first wall and an area S of the first wall satisfy: 0.012≤S1/S≤0.26.

15. The battery cell according to any one of claims 1 to 14, wherein the housing further comprises a second wall, the second wall intersects with the first wall, and the support structure comprises a second support member fixedly connected to the second wall.

16. The battery cell according to claim 15, wherein the second wall forms an accommodating space comprising an opening, the first wall covers the opening to enable the electrode assembly to be disposed in the accommodating space, and the second support member is disposed at the opening.

17. The battery cell according to claim 16, wherein the second support member is provided with a second empty cavity that runs through along the thickness direction of the first wall, and the second empty cavity is configured to guide thermal runaway gas accumulated between the second wall and the electrode assembly to the exhaust channel.

18. The battery cell according to claim 17, wherein the second support member comprises a plurality of second support blocks disposed at intervals along a circumferential direction of the opening, and the second empty cavity comprises an interval between every two of the plurality of second support blocks.

19. The battery cell according to any one of claims 15 to 18, wherein in the thickness direction of the first wall, a surface of the second support member that is away from the first wall is closer to the first wall than a surface of the electrode assembly that is close to the first wall; and
in the thickness direction of the first wall, a projection of the second support member on the first wall intersects with a projection of the electrode assembly on the first wall.

20. The battery cell according to any one of claims 1 to 19, wherein the battery cell further comprises:
an insulating assembly, disposed between the housing and the electrode assembly, and configured to insulate the housing and the electrode assembly; and
the support structure comprises a third support member, the third support member is fixedly connected to the insulating assembly, and the third support member is disposed between the housing and the insulating assembly.

21. The battery cell according to 20, wherein the insulating assembly comprises the first insulating member, the first insulating member is disposed between the first wall and the electrode assembly, and the third support member is fixedly connected to the first insulating member.

22. The battery cell according to claim 20 or 21, wherein the insulating assembly comprises a second insulating member, the second insulating member is covered on an outer surface of the electrode assembly, and the third support member is fixedly connected to the second insulating member.

23. The battery cell according to claim 22, wherein the third support member comprises a second through hole, and the second through hole is used for enabling the thermal runaway gas generated by the electrode assembly to be released between the insulating assembly and the housing.

24. The battery cell according to claim 22 or 23, wherein the third support member is provided with a groove whose opening faces the housing.

25. The battery cell according to any one of claims 20 to 24, wherein the third support member is fixedly connected to the insulating assembly in a manner of snapping.

26. The battery cell according to any one of claims 20 to 24, wherein the third support member is fixedly connected to the insulating assembly in a manner of bonding.

27. The battery cell according to any one of claims 1 to 26, wherein the battery cell further comprises:
a support plate, disposed between the electrode assembly and the housing, and located below the electrode assembly along a gravity direction; and
the support structure comprises a fourth support member, disposed below the electrode assembly along the gravity direction, and a melting point of the fourth support member is higher than a melting point of the support plate.

28. The battery cell according to claim 27, wherein the fourth support member is fixedly connected to the support plate.

29. The battery cell according to any one of claims 1 to 28, wherein the first wall is an end cover.

30. The battery cell according to any one of claims 1 to 29, wherein the battery cell further comprises:
an electrode terminal, disposed on the first wall, wherein
the electrode terminal is electrically connected to the electrode assembly.

31. A battery, comprising the battery cell according to any one of claims 1 to 30.

32. A power consuming apparatus, wherein the power consuming apparatus comprises the battery according to claim 31, and the battery is configured to supply electric energy to the power consuming apparatus.
